# EUROPÄISCHE PATENTSCHRIFT

(11) **EP 1 641 104 B1**
(45) Veröffentlichungstag und Bekanntmachung des Hinweises auf die Patenterteilung: **15.01.2014**
(21) Anmeldenummer: 05107521.6
(22) Anmeldetag: 16.08.2005
(51) Int. Cl.: H02K 3/34

(54) **Wicklungsträger für eine elektrische Maschine**
Winding support for an electrical machine
Support d'enroulement pour une machine électrique

(30) Priorität: 28.09.2004 DE 102004046904
(43) Veröffentlichungstag der Anmeldung: 29.03.2006
(73) Patentinhaber: ROBERT BOSCH GMBH, 70442 Stuttgart (DE)
(72) Erfinder: Herp, Juergen, 77815, Buehl (DE); Roos, Gerald, 77855, Sasbachried (DE)

(56) Entgegenhaltungen:
- WO-A1-97/40567
- GB-A- 122 689
- GB-A- 2 400 755
- US-A1- 2003 015 935

## Beschreibung

### Stand der Technik

Die Erfindung geht aus von einem Wicklungsträger für eine elektrische Maschine nach dem Oberbegriff des Patentanspruchs 1. Ein derartiger Wicklungsträger hat mehrere Polzähne. Benachbarte Polzähne begrenzen zwischen sich wenigstens eine Nut, in die mindestens jeweils eine Wicklung eingelegt wird. Der Wicklungsträger ist in den Nuten und an Stirnseiten mit einer isolierenden Schicht versehen. Denn ohne Nutisolation wird der Wicklungsdraht durch die Stanzkanten der Ankerbleche beschädigt. Mögliche Varianten für diese isolierende Schicht sind Papierauskleidungen, Kunststoffmasken und elektrostatisches Pulverbeschichten.

Bei Papierauskleidungen kann sich der Draht bei der Bewicklung um Kanten herum in das an der Kante befindliche Papier eingraben. Dadurch kann der Draht nicht richtig in den Nutgrund rutschen. Die Folge ist eine ungünstige Verteilung des Drahts und ein niedriger Kupferfüllfaktor. Außerdem besteht die Gefahr, dass der Draht beim Bewickeln hinter die Isolierung gelangt.

Kunststoffmasken decken die Stirnseite des Wicklungsträgers ab und reichen in die Nuten hinein. Dabei muss eine minimale Wandung von 0,4― 0,5 mm vorgesehen werden. Dadurch wird aber der Raum für den Draht und somit den Kupferfüllfaktor vermindert.

Beim elektrostatisches Pulverbeschichten ist zwar ein hoher Kupferfüllfäktor erzielbar. Die Investitionskosten sind aber recht hoch und lohnen nur bei großen Stückzahlen.

Allen Verfahren ist gemein, dass das Material sehr dünn sein muss, da es den verfügbaren Nutraum verkleinert und im elektromagnetischen Kreis keine Funktion bringen.

Mit der WO 97/40567 A1 ist ein Elektromotor bekannt geworden, bei dem die Statornuten gegenüber der Wicklung elektrisch isoliert sind. Hierbei werden die Nuten mit einer eloxierten Aluminiumschicht ausgekleidet.

### Vorteile der Erfindung

Der erfindungsgemäße Wicklungsträger für eine elektrische Maschine mit den Merkmalen des Patentanspruchs 1 hat den Vorteil, dass mit einem einfachen Verfahren, geringen Investitions- und Stoffkosten ein hoher Kupferfültfaktor erreicht werden kann. Hierzu ist ein Wicklungsträger für eine elektrische Maschine vorgesehen, der mehrere Polzähne hat, wobei benachbarte Polzähne zwischen sich wenigstens eine Nut begrenzen, die mit mindestens jeweils einer Wicklung versehen ist, wobei der Wicklungsträger in den Nuten und an Stirnseiten mit einer Schicht versehen ist und wobei zumindest in den Nuten die Schicht wenigstens eine in der jeweiligen Nut angeordnete Blechhülse ist. Da die Blechhülse elektromagnetisch wirksam ist, kann der Polzahn um die Dicke des "Isolierbleches" verringert werden. Die bisher benötigte Fläche für die Nutisolierung kann somit entfallen, da diese Funktion durch eine Blechhülse ersetzt wird. Da das Blech eine Walzoberfläche (sehr glatt) aufweist, wird der Wicklungsdraht nicht beschädigt. Falls diese Isolation nicht ausreicht, kann z.B. Blech mit einer sehr dünnen Isolationsschicht (z.B. Lackierung) eingesetzt werden. Der Wicklungsträger ist an wenigstens einer der beiden Stirnseiten mit einer im Wesentlichen flachen Kunststoffscheibe abgedeckt, wobei die Kunststoffscheibe im Wesentlichen die Polzähne an der wenigstens einen Stirnseite, zumindest da, wo die Wicklung anliegt, abdeckt. Dies kann noch weitergeführt werden, indem die Kunststoffscheibe im Wesentlichen die Form der Stirnseite des Wicklungsträgers hat und zumindest an den Polzähnen auf jeder eine Nut begrenzenden Seite des jeweiligen Polzahnes wenigstens um die Dicke der Blechhülse über diesen Polzahn übersteht.

Die Erfindung ermöglicht einen hohen, wenn nicht den höchsten Kupferfüllfaktor, da keine passiven Isolationsteile in der Nut vorhanden sind. Sie ist kostengünstig, weil billiges Isolationsmaterial (= Blech) verwendet wird. Es erlaubt eine einfache kostengünstige Montage (der Prozess und die Maschine sind ähnlich wie beim Papiereinschieben). Durch Umformung der oberen und unteren Blechkante kann die Isolation auch zur Erzeugung eines Blechpaketes genutzt werden. Dieses Blechpaket kann z.B. als Funktionsbaugruppe zugekauft werden. Es ist eine gute Wärmeabfuhr gegeben, da nur minimale Isolationsschichten zwischen dem Kupferdraht und dem und Blech vorhanden sind. Das isolierte Blechpaket besteht nur aus einem Material (Blech) und ist somit einfach (global) beschaffbar.

Dadurch, dass die Blechhülse wenigstens eine im Wesentlichen U-förmige Querschnittsfläche hat und am Nutgrund und wenigstens an Seitenwänden der jeweiligen Nut anliegt, liegt sie optimal an der Nut an und nur dort, wo es notwendig ist. Wenn die Nuten hinterschnitten sind und die Blechhülsen eine C-förmige Querschnittsfläche haben und an den Hinterschnitten der jeweiligen Nut anliegen, so ist die Wicklung auch beim Bewickein besser geschützt.

Wenn die Blechhülsen mit wenigstens einem ersten Ende an wenigstens einer ersten Stirnseite des Wicklungsträgers über die jeweilige Nut hinausragen und an dem wenigstens ersten Ende einen trichterförmigen, sich erweiternden Abschnitt aufweisen, dessen Rand in Richtung des zweiten Endes der Blechhülsen gebogen ist und an der ersten Stirnseite anliegt, so kann zumindest eine Kunststoffmaske an der betreffenden Stirnseite entfallen, da der Draht ohne Gefahr einer Beschädigung von der Nut zur Stirnseite oder umgekehrt verlegt werden kann. Wenn das zweite Ende der Blechhülsen an der zweiten Stirnseite, einen verbördelten Abschnitt aufweist, der in Richtung des ersten Endes der Blechhülsen gebogen ist und an der zweiten Stirnseite anliegt, so sind gar keine Kunststoffmasken notwendig. Das Isolationsblech deckt die Stanzkanten der Ankerbleche einfach ab.

Vorzugsweise ist die Blechhülse aus einem Blech mit einer gewalzten Oberfläche und/oder mit einer Isolierschicht versehen und/oder aus Elektroblech hergestellt.

In einer bevorzugten Weiterbildung ist ein derartiger Wicklungsträger ein Anker eines Innenläufers oder der Stator eines Außenläufers, bei dem die Polzähne radial nach außen gerichtet sind, da sich hier die Palzähne leicht aufbiegen lassen.

Eine elektrische Maschine mit einem derartigen Wicklungsträger hat gegenüber einer elektrischen Maschine vergleichbarer Baugröße aufgrund des höheren Kupferfüllfaktors eine höhere Leistung.

Weitere Vorteile und vorteilhafte Weiterbildungen ergeben sich aus den Unteransprüchen und der Beschreibung.

### Zeichnung

Ein Ausführungsbeispiel ist in der Zeichnung dargestellt und in der nachfolgenden Beschreibung näher erläutert. Es zeigen
- Figur 1: eine elektrische Maschine im Querschnitt,
- Figur 2: einen Ausschnitt gemäß der Schnittlinie II-II in Figur 1,
- Figur 3: den Ausschnitt gemäß Figur 2 in einer ersten Ausführung,
- Figur 4: ein Ankerpaket in einer perspektivischen Darstellung mit einem Ausbruch in einer ersten Ausführung,
- Figur 5: das Ankerpaket nach Figur 4 während der Montage,
- Figur 6: den Ausschnitt gemäß Figur 2 in einer zweiten Ausführung und
- Figur 7: ein Ankerpaket in einer perspektivischen Darstellung mit einem Ausbruch in einer zweiten Ausführung,

### Beschreibung des Ausführungsbeispiels

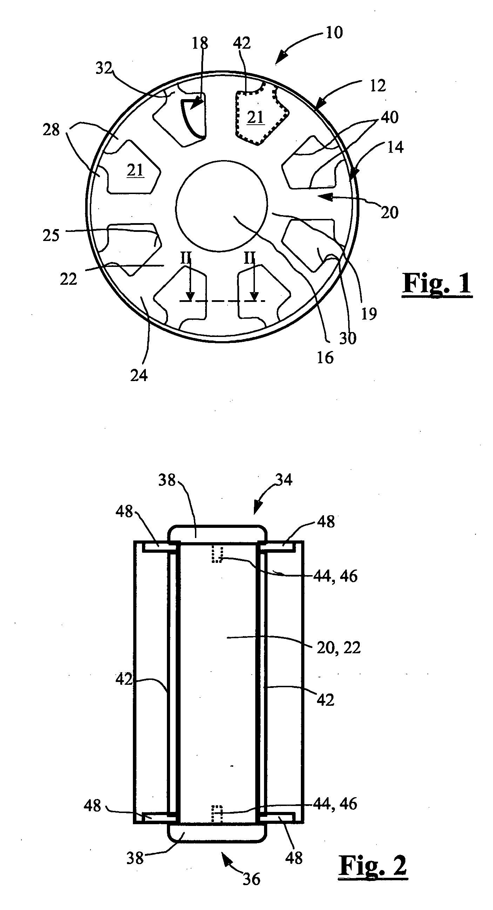

In den Figuren 1 und 2 ist eine rotierende elektrische Maschine 10 vereinfacht dargestellt. Die elektrische Maschine 10 kann ein Gleichstrommotor sein, der in einem Kraftfahrzeug beispielsweise in einem Sitzversteller, Fensterheber, Wischerantrieb etc. verwendet wird. Es kann sich jedoch auch um einen Generator handeln.

Im Gehäuse 12 ist ein Anker 14 angeordnet, der eine Welle 16 umfasst. Der Anker 14 stellt einen Wicklungsträger für eine elektrische Maschine 10 dar. Hergestellt ist der Anker 14 als Lammellenpaket aus Blech oder aus sogenanntem SMC-Material (Soft Magnetic Composite). Bei einem Lamellenpaket aus Blech beträgt die Dicke eines Einzelblechs (entspricht Bezugszeichen 14) 0,5mm, was eine Abweichungen im Zehntelmillimeterbereich einschließen kann.

Der Anker 14 weist mehrere Wicklungen 18 auf. Wegen der besseren Übersichtlichkeit ist in der Figur 1 nur eine Wicklung 18 angedeutet. Von einem kreisrunden Abschnitt 19 des Ankers 14 stehen mehrere Polzähne 20 radial nach außen ab, die Nuten 21 zur Aufnahme der Wicklungen 18 begrenzen bzw. bilden. Im vorliegenden Ausführungsbeispiel handelt es sich um acht Polzähne 20. Korrespondierend hierzu gibt es auch acht Nuten 21. Natürlich sind auch andere Zahlen möglich. Die Polzähne 20 umfassen jeweils einen Zahnhals 22, der vom Abschnitt 19 ausgeht, und einen Zahnkopf 24, der sich an den Zahnhals 22 anschließt. Zwischen den Zahnhälsen 22 ist jeweils am Außenumfang des Abschnitts 19 der Nutgrund 25 einer Nut 21 ausgebildet.

Die Zahnhälse 22 sind vorzugsweise gleichmäßig am Umfang des Ankers 14 verteilt und stehen gerade ab, d.h. sie haben keinen gekrümmten Verlauf. Es ist aber auch denkbar, dass sie einen gekrümmten Verlauf haben. Außerdem haben die Zahnhälse 22 eine im wesentlichen gleichbleibende Breite. Alternativ kann die Breite aber auch variieren, d.h. von innen nach außen schmaler aber auch breiter werden.

Die Zahnköpfe 24 weisen quer zu den Zahnhälsen 22 abstehende und voneinander weg weisende Abschnitte 28 auf. Die Abschnitte 28 bilden Hinterschnitte 30, die somit hinterschnittenen Nuten 21 begrenzen. Außerdem begrenzen die Abschnitte 28 Nutschlitze 32.

Die Stirnseiten 34 und 36 des Lamellenpakets des Ankers 14 sind mit je einer Kunststoffscheibe 38 abgedeckt. Die Nuten 21, d.h. die 40 Seitenwände der Zahnhälse 22, die Nutgrunde 25, erforderlichenfalls die Hinterschnitte 30 und eventuell die Nutschlitze 32, sind mit einer vorzugsweise geschlitzten Blechhülse 42 ausgekleidet, wobei sich der Nutschlitz 32 und der Schlitz der Blechhülse 42 vorzugsweise decken. Wegen der besseren Übersichtlichkeit ist nur in einer Nut 21 der Figur 1 eine Blechhülse mit einer punktierten Linie angedeutet.

Die Kunststoffscheiben 38 haben im Wesentlichen die Form der Stirnseiten 34, 36 des Ankers 14. Im vorliegenden Ausführungsbeispiel haben sie eine Form, die dem scheibenförmigen Abschnitt 19 mit den angeformten Zahnhälsen 22 entspricht. Es können jedoch zusätzlich auch die Zahnköpfe 24 abdeckende Abschnitte vorgesehen sein. Die Kunststoffscheiben 38 müssen im Wesentlichen die Polzähne 20 zumindest da an den Stirnseiten 34, 38 abdecken, wo die Wicklung 18 anliegt. Es ist auch möglich, dass die Kunststoffscheiben 38 einen Schlitz haben, der sich entlang der Zahnhälse 22 erstreckt, um beispielsweise Material einzusparen.

Die Kunststoffscheiben 38 stehen auf jeder eine Nut 21 begrenzenden Seite bzw. den Seitenwänden 40 des jeweiligen Polzahnes 20 wenigstens um die Dicke der Blechhülsen 42 über diesen Polzahn 20 über. Die Dicke der Blechhülsen 42 beträgt ca. 0,4 mm. Im Übergangsbereich von den Stirnseiten 34, 36 in die Nuten 21 sind die Kunststoffscheiben 38 verrundet. Vorzugsweise ist der Radius dieser Verrundung so groß wie der des darumgewickelten Drahtes der Wicklung 18.

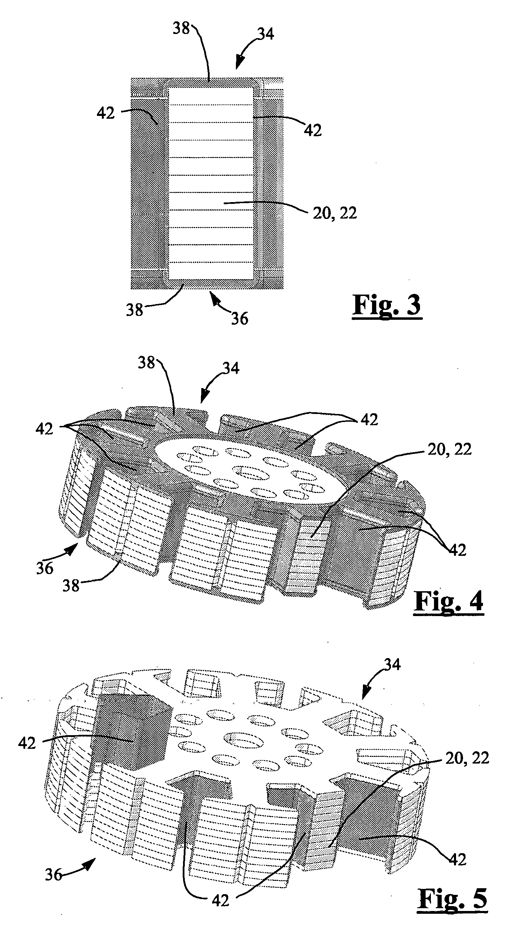

Wie besonders aus der Figur 3 hervorgeht, ragen die Kunststoffscheiben 38 beispielsweise um den Faktor 0,5 bis 5 multipliziert mit der Dicke eines Einzelblechs in die Nuten 21 hinein, wodurch sie auch zentriert werden. Alternativ kann zur Zentrierung jedoch an den Kunststoffscheiben 38 im Bereich der Polzähne 20 ein Zentrierzapfen 44 vorgesehen, der in einer Ausnehmung 46 der Polzähne 20 bzw. deren Zahnhälse 22 angeordnet ist. Beispielsweise kann dies über eine Presspassung oder mittels Kleben erfolgen. Die Ausnehmung 46 kann gestanzt werden.

Alternativ oder zusätzlich haben die Kunststoffscheiben 38 in einer Ebene angeordnete Stege bzw. Flügel 48, die mit den kürzeren einander zugewandten Schmalseiten beidseitig an den Zahnhälsen 22 und an den Hinterschnitten 30 der Polzähne 20 mit zwei ihrer Flächen anliegen. Mit den Flügeln 38 erfolgt ebenfalls eine Zentrierung. Die Flügel 38 sind im Wesentlichen so breit wie die Hinterschnitte 30 oder etwas schmaler und von der in die Nuten 21 hineinreichenden Tiefe kürzer als ihre Breite. Die Flügel 38 sind höchstens so dick wie die Kunststoffscheiben 38, d.h. ein paar Zehntelmillimeter. Da die Flügel 48 flächig nur an den Hinterschnitten 30 anliegen, sind sie in einem Bereich angeordnet, wo sie den Wicklungen 18 keinen Platz wegnehmen.

Die Blechhülsen 42 haben in der jeweiligen Nut 21 im Querschnitt eine U-beziehungsweise C-Form. So wie in Figur 3 dargestellt, ist die jeweils in einer Nut 21 angeordnete Blechhülse 42 einige Zehntelmillimeter oder Millimeter kürzer wie die Länge der Nut 21.

Da die Nuten 21 hinterschnitten sind, haben die Blechhülsen 42 eine C-förmige Querschnittsfläche und liegen an den Hinterschnitten 30 der jeweiligen Nut 21 an. Es würde jedoch auch genügen, dass die Blechhülsen 42 wenigstens eine im Wesentlichen U-förmige Querschnittsfläche haben und am Nutgrund 25 und wenigstens an Seitenwänden 40 der jeweiligen Nut 21 anliegen. Die sich an den Nutgrund 25 anschmiegende Basis ist ziemlich eben. Die an den Seitenwänden 40 anliegenden Seitenschenkel sind gespreizt. Die an den Hinterschnitten 30 anliegenden Endstücke laufen ausgehend von den Seitenschenkeln aufeinander zu und von der Basis weg. Die jeweiligen Übergänge sind verrundet.

In der Figur 4 ist ein fertiges Blechpaket gezeigt, wobei ein Polzahn 22 bzw. Zahnhals 22 zur besseren Verdeutlichung abgebrochen dargestellt ist.

In der Figur 5 ein Blechpaket, in das gerade Blechhülsen 42 geschoben werden, gezeigt. Im Anschluss an diesen Vorgang werden die Stirnseiten 34, 36 mit den Kunststoffscheiben 38 abgedeckt.

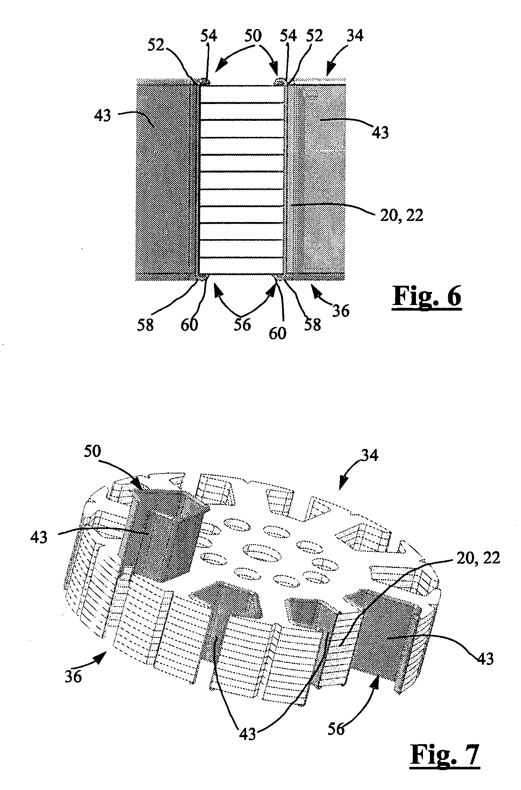

In der Figur 6, wo ebenfalls ein Polzahn 20 bzw. Zahnhals 22 abgebrochen dargestellt ist, ist gezeigt, wie die geschlitzte Blechhülse 43 mit einem ersten Ende 50 an einer ersten Stirnseite 34 des Wicklungsträgers 14 über die jeweilige Nut 21 hinausragt und an dem ersten Ende 50 einen trichterförmigen, sich erweiternden Abschnitt 52 aufweist. Der Rand 54 des Abschnitts 52 ist in Richtung des zweiten Endes 56 der Blechhülse 42 gebogen und liegt an der ersten Stirnseite 34 an. Das zweite Ende 56 der Blechhülsen 42 weist an der zweiten Stirnseite 34, 36 einen verbördelten Abschnitt 58 auf, der sich ebenfalls wie der erste Abschnitt trichterförmig erweitert und dessen Rand 60 in Richtung des ersten Endes 50 gebogen ist. Mit dem verbördelten Abschnitt 58 liegt die Hülse 42 an der zweiten Stirnseite 36 an.

Natürlich genügt es, wenn nur ein erstes Ende 50 der Blechhülse 43 einen verbördelten oder trichterförmigen, sich erweiternden Abschnitt 52 aufweist. So wird die Blechhülse 43 übrigens zunächst auch hergestellt. Nachdem die Blechhülse 43, wie in Figur 7 angedeutet, von einer Stirnseite 34 her eingeführt ist, kann gemäß Figur 6 eine Verbördelung erfolgen oder eine Abdeckung mit einer Kunststoffscheibe 38 gemäß Figur 4 vorgesehen werden.

Die Blechhülsen 42, 43 sind aus einem Blech mit einer gewalzten Oberfläche und/oder mit einer Isolierschicht versehen und/oder aus Elektroblech. Beispielsweise kommen mit Silizium legierte, kaltgewalzte Feinbleche in Dicken von etwa 0,20 bis 0,65 mm mit besonderen magnetischen Eigenschaften nach DIN 46400 in Frage. Auch können kaltgewalzte Elektrobleche und ―bänder nach DIN EN 10106, DIN EN 10107, DIN EN 10126, DIN EN 10165 oder DIN IEC 61021 verwendet werden. Aber auch warmgewalztes Blech kann eingesetzt werden. Die Blechhülsen 42, 43 können gestanzt und dann gebogen oder tiefgezogenen werden.

Die Erfindung ist nicht nur auf Wicklungsträger in Form des Ankers 14 beschränkt. Wie sich unmittelbar aus der Darstellung ergibt, kann es sich statt eines Ankers auch um einen Ständer bzw. Stator eines Außenläufermotors oder Generators handeln. Ferner müssen die Polzähne nicht wie gezeigt radial nach außen zeigen. Beispielsweise können sie von einem größeren runden Abschnitt 19 nach innen zeigen, wie dies beispielsweise bei Statoren von Generatoren oder elektronisch kommutierten Elektromotoren der Fall ist.

Besonders gute Verhältnisse für das Fügen der Blechhülsen 42, 43 in die Nuten 21 ergeben sich bei elektrische Maschinen 10, bei denen die Länge der Nuten 21 kleiner als der Durchmesser des Wicklungsträgers 14 ist. Daher sind die Blechhülsen 42, 43 besonders gut derartige Maschinen geeignet.

## Patentansprüche

1. Wicklungsträger (14) für eine elektrische Maschine (10), der mehrere Polzähne (20) hat, wobei benachbarte Polzähne (20) zwischen sich wenigstens eine Nut (21) begrenzen, in der jeweils mindestens eine Wicklung (18) angeordnet ist, wobei der Wicklungsträger (14) in den Nuten (21) und an Stirnseiten (34, 36) mit einer Schicht versehen ist, wobei zumindest in den Nuten (21) die Schicht wenigstens eine in der jeweiligen Nut (21) angeordnete Blechhülse (42, 43) ist, **dadurch gekennzeichnet, dass** die Blechhülse (42, 43) elektromagnetisch wirksam und gegenüber der Wicklung (18) elektrisch isoliert ist, wobei der Wicklungsträger (14) an wenigstens einer der beiden Stirnseite (34, 36) als Schicht mit einer im Wesentlichen flachen Kunststoffscheibe (38) abgedeckt ist, wobei die Kunststoffscheibe (38) im Wesentlichen die Polzähne (20) an der wenigstens einen Stirnseite (34, 38), zumindest da, wo die Wicklung (18) anliegt, abdeckt, und zumindest an den Polzähnen (20) auf jeder eine Nut (21) begrenzenden Seite (40) des jeweiligen Polzahnes (20) wenigstens um die Dicke der Blechhülse (42, 43) über diesen Polzahn (20) übersteht

2. Wicklungsträger (14) nach Anspruch 1, **dadurch gekennzeichnet, dass** die Blechhülse (42, 43) wenigstens eine im Wesentlichen U-förmige Querschnittsfläche hat und am Nutgrund (25) und wenigstens an Seitenwänden (40) der jeweiligen Nut (21) anliegt.

3. Wicklungsträger (14) nach Anspruch 1 oder 2, **dadurch gekennzeichnet, dass** die Nuten (21) hinterschnitten sind und die Blechhülsen (42, 43) eine C-förmige Querschnittsfläche haben und an den Hinterschnitten (30) der jeweiligen Nut (21) anliegen.

4. Wicklungsträger (14) nach einem der vorhergehenden Ansprüche, **dadurch gekennzeichnet, dass** die Blechhülsen (43) mit wenigstens einem ersten Ende an wenigstens einer ersten Stirnseite (34) des Wicklungsträgers (14) über die jeweilige Nut (21) hinausragen und an dem wenigstens ersten Ende (50) einen trichterförmigen, sich erweiternden Abschnitt (52) aufweise, dessen Rand (54) in Richtung des zweiten Endes (56) der Blechhülsen (42) gebogen ist und an der ersten Stirnseite (34) anliegt.

5. Wicklungsträger (14) nach Anspruch 4, **dadurch gekennzeichnet, dass** das zweite Ende (56) der Blechhülsen (42) an der zweiten Stirnseite (34, 36) einen verbördelten Abschnitt (58) aufweist, der in Richtung des ersten Endes (50) der Blechhülsen (42) gebogen ist und an der zweiten Stirnseite (36) anliegt.

6. Wicklungsträger (14) nach einem der vorhergehenden Ansprüche, **dadurch gekennzeichnet, dass** die Kunststoffscheibe (38) im Übergangsbereich von der wenigstens einen Stirnseite (34, 36) in die Nuten (21) verrundet ist

7. Wicklungsträger (14) nach einem der vorhergehenden Ansprüche, **dadurch gekennzeichnet, dass** die Kunststoffscheibe (38) im Bereich der Polzähne (20) einen Zentrierzapfen (44) aufweist, der in einer Ausnehmung (46) der Polzähne (20) oder deren Zahnhälse (22) angeordnet ist.

8. Wicklungsträger (14) nach einem der vorhergehenden Ansprüche, **dadurch gekennzeichnet, dass** die Blechhülse (42, 43) aus einem Blech mit einer gewalzten Oberfläche und/oder mit einer Isolierschicht versehen und/oder aus einem Elektroblech ist.

9. Wicklungsträger (14) nach einem der vorhergehenden Ansprüche, **dadurch gekennzeichnet, dass** der Wicklungsträger (14) ein Anker eines innenläufers oder ein Stator eines Außenläufers ist und die Polzähne (20) radial nach außen gerichtet sind.

10. Wicklungsträger (14) nach einem der vorhergehenden Ansprüche, dadurch gekenntzeichnet, dass keine elektromagnetisch passiven Isolatiansteile in der Nut (21) vorhanden sind.

11. Wicklungsträger (14) nach einem der vorhergehenden Ansprüche, **dadurch gekennzeichnet, dass** die Blechhülsen (42, 43) als eine Isolationsschicht eine Lackierung aufweiset.

12. Elektrische Maschine (10) mit einem Wicklungsträger (14) nach einem der vorhergehenden Ansprüche:

## Claims

1. Winding support (14) for an electrical machine (10) which has a plurality of pole teeth (20), wherein adjacent pole teeth (20) delimit at least one slot (21) between them, in each case at least one winding (18) being arranged in the said slot, wherein the winding support (14) is provided with a layer in the slots (21) and at end faces (34, 36), wherein, at least in the slots (21), the layer is at least one sheet-metal sleeve (42, 43) which is arranged in the respective slot (21), **characterized in that** the sheet-metal sleeve (42, 43) is electromagnetically active and electrically insulated from the winding (18), wherein the winding support (14) is covered at at least one of the two end faces (34, 36) by a substantially flat plastic disc (38) as a layer, wherein the plastic disc (38) substantially covers the pole teeth (20) at the at least one end face (34, 38), at least where the winding (18) bears, and, at least at the pole teeth (20) on each side (40), which delimits a slot (21), of the respective pole tooth (20), projects beyond this pole tooth (20) at least by the thickness of the sheet-metal sleeve (42, 43).

2. Winding support (14) according to Claim 1, **characterized in that** the sheet-metal sleeve (42, 43) has at least a substantially U-shaped cross-sectional area and bears against the slot base (25) and at least against side walls (40) of the respective slot (21).

3. Winding support (14) according to Claim 1 or 2, **characterized in that** the slots (21) are undercut and the sheet-metal sleeves (42, 43) have a C-shaped cross-sectional area and bear against the undercuts (30) in the respective slot (21).

4. Winding support (14) according to one of the preceding claims, **characterized in that** the sheet-metal sleeves (43) project beyond the respective slot (21) at at least a first end face (34) of the winding support (14) by way of at least a first end, and have a funnel-like, widening section (52) at the at least first end (50), the edge (54) of the said section being bent in the direction of the second end (56) of the sheet-metal sleeves (42) and bearing against the first end face (34).

5. Winding support (14) according to Claim 4, **characterized in that** the second end (56) of the sheet-metal sleeves (42) has a beaded section (58) at the second end face (34, 36), the said beaded section being bent in the direction of the first end (50) of the sheet-metal sleeves (42) and bearing against the second end face (36).

6. Winding support (14) according to one of the preceding claims, **characterized in that** the plastic disc (38) is rounded in the transition region from the at least one end face (34, 36) to the slots (21).

7. Winding support (14) according to one of the preceding claims, **characterized in that** the plastic disc (38) has a centring pin (44) in the region of the pole teeth (20), the said centring pin being arranged in a recess (46) in the pole teeth (20) or the tooth necks (22) of the said pole teeth.

8. Winding support (14) according to one of the preceding claims, **characterized in that** the sheet-metal sleeve (42, 43) which is composed of a metal sheet is provided with a rolled surface and/or with an insulating layer and/or is composed of an electrical sheet.

9. Winding support (14) according to one of the preceding claims, **characterized in that** the winding support (14) is an armature of an internal rotor or is a stator of an external rotor, and the pole teeth (20) are oriented radially outwards.

10. Winding support (14) according to one of the preceding claims, **characterized in that** there are no electromagnetically passive insulating parts in the slot (21).

11. Winding support (14) according to one of the preceding claims, **characterized in that** the sheet-metal sleeve (42, 43) has a coating as an insulating layer.

12. Electrical machine (10) comprising a winding support (14) according to one of the preceding claims.

## Revendications

1. Support d'enroulement (14) pour une machine électrique (10), qui présente plusieurs dents polaires (20), des dents polaires adjacentes (20) délimitant entre elles au moins une rainure (21) dans laquelle est disposé à chaque fois au moins un enroulement (18), le support d'enroulement (14) dans les rainures (21) et au niveau des côtés frontaux (34, 36) étant pourvu d'une couche, au moins dans les rainures (21), la couche étant au moins une douille en tôle (42, 43) disposée dans la rainure respective (21), **caractérisé en ce que** la douille en tôle (42, 43) a un effet électromagnétique et est isolée électriquement par rapport à l'enroulement (18), le support d'enroulement (14) étant recouvert au niveau d'au moins l'un des deux côtés frontaux (34, 36) sous forme de couche par un disque en plastique essentiellement plat (38), le disque en plastique (38) recouvrant essentiellement les dents polaires (20) au niveau de l'au moins un côté frontal (34, 38), au moins à l'endroit où s'applique l'enroulement (18), et faisant saillie au moins au niveau des dents polaires (20) sur chaque côté (40) limitant une rainure (21) de la dent polaire respective (20), au-delà de cette dent polaire (20) au moins de l'épaisseur de la douille en tôle (42, 43).

2. Support d'enroulement (14) selon la revendication 1, **caractérisé en ce que** la douille en tôle (42, 43) présente au moins une surface en section transversale essentiellement en forme de U et s'applique contre le fond de rainure (25) et au moins contre des parois latérales (40) de la rainure respective (21).

3. Support d'enroulement (14) selon la revendication 1 ou 2, **caractérisé en ce que** les rainures (21) sont en contre-dépouille et les douilles en tôle (42, 43) présentent une surface en section transversale en forme de C et s'appliquent contre les contre-dépouilles (30) de la rainure respective (21).

4. Support d'enroulement (14) selon l'une quelconque des revendications précédentes, **caractérisé en ce que** les douilles en tôle (43) font saillie avec au moins une première extrémité au niveau d'au moins un premier côté frontal (34) du support d'enroulement (14) au-delà de la rainure respective (21) et présentent au niveau de l'au moins une première extrémité (50) une portion (52) s'élargissant en forme d'entonnoir, dont le bord (54) est cintré dans la direction de la deuxième extrémité (56) des douilles en tôle (42) et s'applique contre le premier côté frontal (34).

5. Support d'enroulement (14) selon la revendication 4, **caractérisé en ce que** la deuxième extrémité (56) des douilles en tôle (42) présente, au niveau du deuxième côté frontal (34, 36), une portion bridée (58), laquelle est cintrée dans la direction de la première extrémité (50) des douilles en tôle (42) et s'applique contre le deuxième côté frontal (36).

6. Support d'enroulement (14) selon l'une quelconque des revendications précédentes, **caractérisé en ce que** le disque en plastique (38) est arrondi dans la région de transition depuis l'au moins un côté frontal (34, 36) dans les rainures (21).

7. Support d'enroulement (14) selon l'une quelconque des revendications précédentes, **caractérisé en ce que** le disque en plastique (38) présente, dans la région des dents polaires (20), un tourillon de centrage (44) qui est disposé dans un évidement (46) des dents polaires (20) ou de leurs cols de dent (22).

8. Support d'enroulement (14) selon l'une quelconque des revendications précédentes, **caractérisé en ce que** la douille en tôle (42, 43) est pourvue d'une tôle comprenant une surface laminée et/ou une couche isolante et/ou est constituée d'une tôle électrique.

9. Support d'enroulement (14) selon l'une quelconque des revendications précédentes, **caractérisé en ce que** le support d'enroulement (14) est un induit d'un rotor interne ou un stator d'un rotor externe et les dents polaires (20) sont orientées radialement vers l'extérieur.

10. Support d'enroulement (14) selon l'une quelconque des revendications précédentes, **caractérisé en ce qu'**aucune pièce d'isolation passive du point de vue électromagnétique n'est prévue dans la rainure (21).

11. Support d'enroulement (14) selon l'une quelconque des revendications précédentes, **caractérisé en ce que** la douille en tôle (42, 43) présente, en tant que couche isolante, un laquage.

12. Machine électrique (10) comprenant un support d'enroulement (14) selon l'une quelconque des revendications précédentes.
